# FASCICULE DE BREVET EUROPEEN

(11) **EP 1 342 552 B1**
(45) Date de publication et mention de la délivrance du brevet: **25.01.2006**
(21) Numéro de dépôt: 03290447.6
(22) Date de dépôt: 26.02.2003
(51) Int. Cl.: B29C 70/24, B29C 70/54, B32B 7/08

(54) **Procédé pour la réalisation d'une pièce monolitique composite thermostructurale à double paroi et pièce obtenue par ledit procédé**
Verfahren zur Herstellung eines monolithischen, doppelwandigen und hitzbeständigen Verbundwerkstoffteiles und danach hergestelltes Verbundwerkstoffteil
Method for producing a monolithic, thermostructural and double-walled composite body and composite body obtained by this method

(30) Priorité: 04.03.2002 FR 0202684
(43) Date de publication de la demande: 10.09.2003
(73) Titulaire: EADS SPACE Transportation SAS, 75116 Paris (FR); MBDA France, 75116 Paris (FR)
(72) Inventeur: Salmon, Thierry, 33000 Bordeaux (FR); Cahuzac, Georges, 33110 Le Bouscat (FR); Bouchez, Marc, 18000 Bourges (FR); Falempin, François, 78730 St Arnoult en Yvelines (FR)
(74) Mandataire: Bonnetat, Christian

(56) Documents cités:
- DE-A- 10 018 035
- DE-U- 9 110 061
- FR-A- 2 718 670
- US-A- 4 196 251

## Description

La présente invention concerne une pièce monolithique composite fibres/matrice thermostructurale comportant deux peaux de matériau composite espacées l'une de l'autre et reliées l'une à l'autre par une pluralité d'entretoises filiformes de matériau composite, ladite pièce étant capable de résister à des pressions internes et/ou externes élevées.

Une telle pièce composite monolithique, par exemple destinée à former des panneaux pouvant véhiculer un fluide, des structures de blindage anti-balistique, des protections thermiques, des supports de dispositifs optiques spatiaux ou des radômes réfractaires pour radars à haute résolution, etc ..., est décrite dans le document FR-A-2 749 327. Dans ce document, la structure fibreuse de la pièce composite monolithique est obtenue par tricotage, les parties de ladite structure fibreuse correspondant auxdites peaux étant formées de rangs de mailles tricotées, alors que la partie de ladite structure fibreuse correspondant auxdites entretoises est constituée de fils de tricotage obliques reliant des mailles de l'une des peaux à des mailles de l'autre desdites peaux.

Ainsi, cette structure fibreuse se présente sous la forme de deux panneaux constitués de mailles, écartés l'un de l'autre et reliés l'un à l'autre par une pluralité de fils de liaison obliques. On remarquera que cette disposition est particulièrement favorable à l'imprégnation par la résine destinée à former la matrice de la pièce composite, puisque lesdits fils de liaison entre les deux panneaux sont dégagés et accessibles directement à la résine. Cependant, dans une telle structure, les deux panneaux peuvent bouger l'un par rapport à l'autre du fait de la souplesse desdits fils de liaison, ce qui soulève des difficultés quant à la disposition de ladite structure dans le moule d'imprégnation et au respect des dimensions désirées pour la pièce composite monolithique.

De plus, on doit constater que cette pièce composite monolithique connue présente des propriétés mécaniques limitées, puisque, dans lesdites peaux, les fibres à haute résistance mécanique constituant la structure sont bouclées et ne peuvent donc travailler ni en traction, ni en compression et pas même en flexion, ce pour quoi elles sont avantageusement utilisées dans les matériaux composites. De même, les fils de liaison obliques ne peuvent assurer une résistance optimale à l'écrasement et au gonflement de cette pièce composite connue.

Par ailleurs, une pièce composite monolithique à double paroi et entretoises filiformes est mentionnée, de façon accessoire, dans le document FR-A-2 718 670 qui, à titre principal, décrit une pièce composite obtenue de la façon suivante conformément au préambule de la revendication 1 :
- sur chacune des faces opposées d'une âme souple, réalisée en un matériau apte à être pénétré par une aiguille, on applique une armature fibreuse souple pour chacune desdites peaux ;
- on assemble par piquage lesdites armatures fibreuses et ladite âme, au moyen d'un fil formant des points de piqûre obliques qui comportent des tronçons de fil traversant lesdites armatures fibreuses et ladite âme ;
- on imprègne ladite structure sandwich par la résine, qui est destinée à engendrer ladite matrice et qui se trouve alors à l'état visqueux ; et
- on procède au durcissement de ladite résine imprégnant lesdites armatures fibreuses.

Ce document antérieur mentionne de plus que ladite âme peut être, d'une part, réalisée en un matériau imperméable à ladite résine et, d'autre part, éliminée après l'opération de durcissement de la résine, ce qui permettrait d'obtenir ladite pièce composite monolithique.

Cependant, aucune indication n'est apportée dans le document FR-A-2 718 670 à propos de la transformation desdits tronçons de fil traversants en entretoises composites filiformes. Or, l'imprégnation desdits tronçons de fils traversants ne peut se produire pendant l'imprégnation desdites armatures fibreuses puisque, alors, lesdits tronçons de fil traversants sont isolés de la résine d'imprégnation par ladite âme souple, dans laquelle ils sont incorporés. Pour admettre que lesdits tronçons de fil traversants peuvent être imprégnés de résine pour devenir des entretoises rigides composites, il faut donc supposer que :
- soit on réalise une nouvelle imprégnation par résine et un nouveau durcissement de celle-ci, après élimination de ladite âme ;
- soit le fil de piquage est préimprégné par de la résine.

Dans le premier cas, l'imprégnation et le durcissement supplémentaires doivent se faire alors que les tronçons de fil traversants sont encore souples, ce qui --comme mentionné ci-dessus à propos du document FR-A-2 749 327-- entraîne des difficultés de positionnement d'une peau par rapport à l'autre et des défauts pour la pièce monolithique.

Dans le second cas, la résine imprégnant le fil de piquage préimprégné encrasse rapidement la machine de piquage, jusqu'à en interdire tout fonctionnement.

De plus, dans la structure de ce dernier document, lesdits points de piqûre étant obliques par rapport aux armatures fibreuses, une telle structure présente une résistance à l'écrasement et au gonflement qui n'est pas optimale, tout comme la structure du document FR-A-2 749 327.

La présente invention a pour objet de remédier à ces inconvénients. Elle permet de réaliser ladite pièce monolithique thermostructurale, sans opérations supplémentaires d'imprégnation et de durcissement et sans préimprégnation du fil de piquage, tout en permettant un positionnement de précision de la structure fibreuse dans le moule d'imprégnation et une utilisation optimale des propriétés mécaniques des fibres constituant lesdites peaux.

A cette fin, selon l'invention, le procédé pour la réalisation d'une pièce monolithique composite fibres/matrice thermostructurale comportant deux peaux de matériau composite espacées l'une de l'autre et reliées l'une à l'autre par une pluralité d'entretoises filiformes de matériau composite, procédé selon lequel :
a) on forme une structure sandwich souple comportant une âme souple intermédiaire, réalisée en un matériau apte à être pénétré par une aiguille et imperméable à la résine devant engendrer ladite matrice, et deux armatures fibreuses souples externes, respectivement disposées sur des faces externes opposées de ladite âme souple ;
b) on assemble par piquage lesdites armatures fibreuses et ladite âme de cette structure sandwich, au moyen d'un fil formant des points de piqûre qui comportent des tronçons de fil traversant lesdites armatures fibreuses et ladite âme ;
c) on imprègne ladite structure sandwich par ladite résine, à l'état visqueux ;
d) on procède au durcissement de ladite résine imprégnant ladite structure sandwich ; et
e) on élimine ladite âme,

est remarquable :
- en ce que ledit fil de piquage est constitué par une mèche comportant une pluralité de filaments non liés entre eux ;
- en ce que, après l'opération de piquage spécifiée sous b), lesdits tronçons de fil traversant lesdites armatures fibreuses et ladite âme présentent, dans cette dernière, des canaux longitudinaux ménagés entre lesdits filaments et s'étendant de l'une desdites armatures fibreuses à l'autre ; et
- en ce que l'opération d'imprégnation spécifiée sous c) est réalisée de façon que ladite résine durcissable soit amenée à pénétrer dans lesdits canaux longitudinaux desdits tronçons de fil traversants pour former, à l'emplacement de chacun de ceux-ci, un pont de résine en contact par ses extrémités opposées avec la résine imprégnant lesdites armatures fibreuses souples.

Ainsi, grâce à la présente invention, lesdits tronçons de fil traversants sont imprégnés de résine, lors de l'imprégnation des armatures fibreuses desdites peaux et, de même, ils sont durcis pendant le durcissement desdites armatures fibreuses, préalablement à l'élimination de ladite âme, de sorte qu'ils deviennent des entretoises filiformes de matière composite disposées entre lesdites peaux composites.

Pour obtenir un tel résultat, on peut agir sur plusieurs paramètres, de préférence pris en combinaison, tels que, par exemple :
- le diamètre de l'aiguille de piquage, passant ledit fil à travers lesdites armatures fibreuses et ladite âme ;
- la nature du matériau constituant ladite âme ;
- la viscosité de la résine d'imprégnation ;
- les conditions de l'imprégnation ; etc ...

D'excellents résultats ont été obtenus en choisissant une aiguille adaptée au nombre de filaments du fil de piquage et en réalisant ladite âme en une mousse d'une matière synthétique, de préférence un polystyrène, présentant une densité comprise entre 0,04 et 0,1 et, de préférence, entre 0,05 et 0,07. On a ainsi obtenu, après imprégnation et durcissement de ladite structure sandwich, des entretoises filiformes présentant un taux de fibre compris entre 30% et 90% et, de préférence, entre 30% et 50%.

Ladite opération d'imprégnation est réalisée de préférence sous dépression --éventuellement sous vide-- et, en fonction de la valeur de cette dépression, de la section desdits canaux longitudinaux et de la longueur desdits tronçons de fil traversants, on adapte expérimentalement la viscosité de ladite résine d'imprégnation, par exemple par dilution, pour que celle-ci pénètre sur toute la longueur desdits tronçons de fil traversants.

Ledit assemblage de la structure sandwich peut être obtenu par piquage avec ou sans nouage. Dans le premier cas (piquage avec nouage), les extrémités desdits tronçons de fil traversants sont ancrées solidement auxdites armatures fibreuses par les ponts reliant deux tels tronçons consécutifs. Dans le second (piquage sans nouage), il y a formation, d'un côté de ladite structure sandwich, de boucles saillantes, de sorte que de ce côté l'ancrage des extrémités des tronçons de fil traversants à l'armature correspondante résulte de l'aplatissement desdites boucles, alors que de l'autre côté de ladite structure sandwich, les extrémités des tronçons de fil traversants sont ancrées à l'armature fibreuse correspondante par des ponts reliant deux tronçons consécutifs.

Le fil de piquage et les armatures fibreuses peuvent être en carbone ou analogue, alors que ladite résine est apte à engendrer du carbone. Notamment dans ce cas, il est avantageux que, après ladite opération de durcissement de la résine, on procède à une élévation de température de ladite structure sandwich afin d'obtenir la pyrolyse de ladite résine, qui forme alors la matrice carbone de ladite pièce composite, et que l'élimination de ladite âme résulte de cette élévation de température. Cette résine peut être de type phénolique.

On remarquera que, grâce à la réalisation de ladite structure sandwich par piquage, il est possible de conférer à chacune desdites armatures toute organisation fibreuse adaptée au mieux à l'utilisation envisagée pour la pièce monolithique composite et de positionner, avec précision et d'un seul bloc, la structure fibreuse dans un moule pour l'imprégnation par la résine. En outre, lesdits tronçons de fil traversants sont de préférence orthogonaux auxdites armatures fibreuses, de façon que les entretoises soient orthogonales auxdites peaux et communiquent à la pièce composite une résistance maximale à l'écrasement et au gonflement.

On notera que le document DE-U-9110061 décrit une matière plastique sandwich en feuille, notamment pour la construction de bateaux, qui est perfectionnée pour renforcer son âme intermédiaire et pour améliorer sa résistance au délaminage, des filaments étant piqués seulement dans ladite âme et des revêtements superficiels étant collés sur celle-ci.

Les figures du dessin annexé feront bien comprendre comment l'invention peut être réalisée. Sur ces figures, des références identiques désignent des éléments semblables.

Les figures 1A à 1E illustrent schématiquement cinq étapes du procédé conforme à la présente invention.

La figure 2 est une coupe transversale partielle, agrandie et schématique, du fil de piquage utilisé dans le procédé de l'invention.

La figure 3 montre, en coupe schématique, un mode de réalisation de la pièce monolithique conforme à la présente invention.

Les figures 4A à 4C illustrent schématiquement trois étapes d'une variante de mise en oeuvre du procédé conforme à la présente invention.

Les figures 5A et 5B illustrent schématiquement une autre variante de l'invention.

Les figures 6A et 6B illustrent schématiquement encore une autre variante de l'invention.

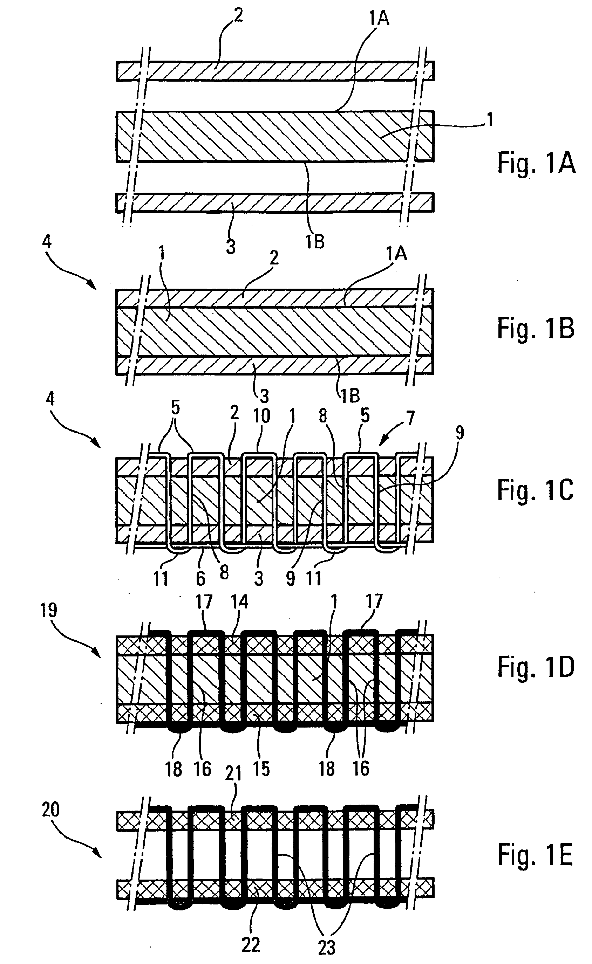

A des fins de clarté, sur les figures 1C à 1E, 3, 4A à 4C, 5B et 6B, les deux tronçons de fil de chaque point de piquage sont représentés très espacés l'un de l'autre, mais il va de soi que, en réalité, ils sont très proches l'un de l'autre.

Sur la figure 1A, on a représenté en coupe schématique éclatée une âme souple 1 et deux armatures fibreuses souples 2 et 3.

L'âme souple 1, qui est représentée sous la forme d'une plaque, peut en réalité présenter toute forme comportant deux faces opposées 1A et 1B, comme par exemple une forme cylindrique, conique ou prismatique. Elle est réalisée en une matière apte à être pénétrée par une aiguille, telle que par exemple une mousse d'un polyuréthane, d'un polypropylène ou, de préférence, d'un polystyrène, présentant une densité comprise entre 0,04 et 0,1, de préférence entre 0,05 et 0,07. De plus, cette matière est imperméable à la résine qui sera utilisée ci-après pour l'imprégnation des armatures fibreuses souples 2 et 3.

Chacune des armatures fibreuses souples 2 et 3 présente une structure fibreuse, qui peut être réalisée de toute manière connue, mais qui est de préférence des types décrits dans les documents US-A-5 390 707, US-A-5 759 321 ou FR-A-2 753 993. Lesdites armatures 2 et 3 se présentent chacune sous la forme d'une couche réalisée à base de fibres de carbone ou de SiC ou encore de tout autre matière apte à former des fibres à haute résistance. Ces armatures peuvent présenter des épaisseurs différentes.

Comme cela est illustré sur la figure 1 B, les armatures souples 2 et 3 sont respectivement disposées sur des faces externes opposées 1A et 1B de l'âme souple 1, de sorte qu'est obtenue une structure sandwich souple 4. On remarquera que, comme cela est suggéré par la figure 1A, les armatures fibreuses souples 2 et 3 peuvent être réalisées indépendamment de l'âme souple 1, pour être ensuite rapportées sur les faces 1A et 1B de celle-ci. En revanche, lesdites armatures 2 et 3 peuvent également être formées directement sur lesdites faces 1A et 1B de l'âme 1.

Les éléments 1, 2 et 3 de la structure sandwich 4 sont assemblés les uns aux autres par piquage avec nouage au moyen d'un fil d'aiguille 5 et d'un fil de navette 6 (voir la figure 1C). Le fil d'aiguille 5 forme une pluralité de rangs de points de piqûre, parallèles et/ou croisés, non représentés. Chaque point de piqûre 7 comporte deux tronçons de fil 8 et 9, traversant les armatures 2 et 3 et l'âme 1, et un pont 10 reliant lesdits tronçons de fil 8 et 9, et il est relié au point 7 précédent et au point 7 suivant par des ponts 11, dans lesquels passe ledit fil de navette 6.

Comme cela est représenté sur les figures, il est avantageux que les armatures 2 et 3 soient parallèles l'une à l'autre et que les tronçons de fil traversants 8 et 9 soient orthogonaux auxdites armatures.

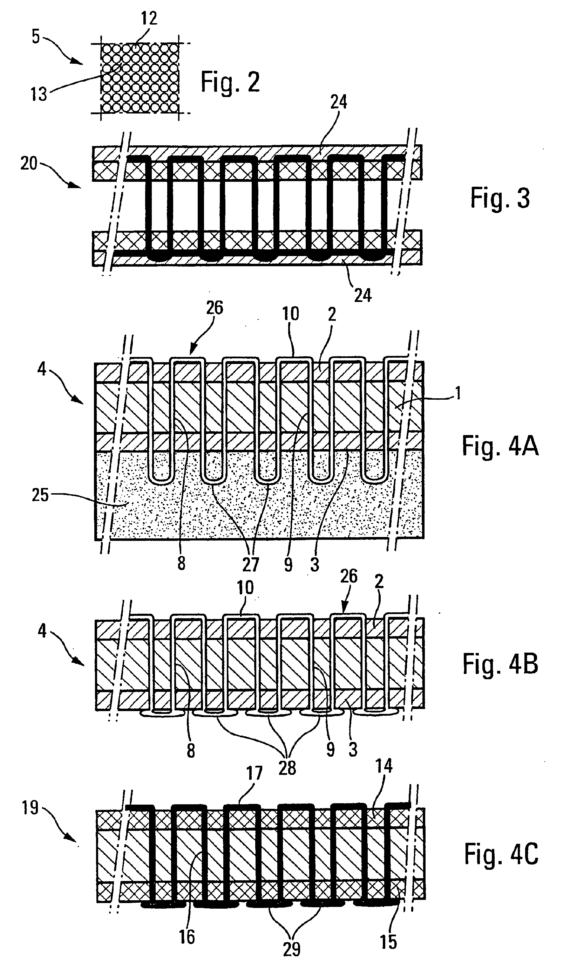

Au moins le fil d'aiguille 5, mais de préférence également le fil de navette 6, est constitué par une mèche comportant une pluralité de filaments 12 non liés entre eux qui, même lorsqu'ils sont pressés transversalement les uns contre les autres, ménagent entre eux des vides longitudinaux, de sorte que chaque tronçon de fil traversant 8, 9 comporte une pluralité de canaux 13, de faible section, entre les filaments 12 qui le composent (voir la figure 2). Il va de soi que, lorsque ledit fil d'aiguille 5 n'est pas pressé transversalement, les canaux 13 peuvent présenter des sections plus grandes que celles illustrées sur la figure 2. Chaque filament 12 peut être en carbone, en SiC ou en toute autre matière apte à former des fibres à haute résistance.

Après piquage du fil d'aiguille 5, lesdites armatures 2 et 3 sont donc reliées l'une à l'autre par des canaux 13.

Dans un exemple de réalisation avantageux, pour réaliser le piquage illustré par la figure 1C, on utilise une aiguille (non représentée) ayant un diamètre de l'ordre de 2 mm et un fil d'aiguille 5 constitué d'au moins 6 000, mais de préférence 12 000, filaments 12 de carbone, ayant chacun un diamètre de l'ordre de 5 micromètres.

On remarquera que, à ce stade du procédé, la structure sandwich 4 assemblée par les fils 5 et 6 est souple et peut éventuellement subir des modifications de forme.

Après piquage, la structure sandwich 4 est imprégnée par une résine durcissable, relativement peu visqueuse et éventuellement diluée, à l'alcool par exemple. Une telle résine peut être du type phénolique, époxy, cyanate-ester, etc ... L'imprégnation est réalisée de préférence sous dépression, de façon que ladite résine pénètre, non seulement dans les armatures fibreuses 2 et 3, mais encore dans les canaux longitudinaux 13 des fils 5 et 6.

Dans un exemple de mise en oeuvre du procédé conforme à la présente invention, on utilise une résine phénolique telle que celles connues commercialement sous les dénominations RA 101 (fabriquée par la société RHONE POULENC) ou FRD J2027 (fabriquée par la société BORDEN). Cette résine est diluée dans de l'éthanol, par exemple dans la proportion de 25% de résine et de 75% d'éthanol pour en ajuster la viscosité. Eventuellement, on ajuste également la tension superficielle de la résine diluée par addition de produits tensioactifs (quelques pour cents en poids), afin que celle-ci mouille convenablement les fibres des armatures fibreuses 2 et 3 et les fils de piquage 5 et 6. Un tel ajustement de tension superficielle est notamment indispensable lorsque lesdites fibres et fils sont en silice, par exemple. Cependant, si comme cela est le cas dans les exemples mentionnés ci-dessus, ces fibres et fils sont à base de carbone, une telle addition de produits tensioactifs n'est pratiquement pas nécessaire, car la tension superficielle du carbone est très faible.

Cette résine diluée est alors disposée dans un récipient apte à être obturé de façon étanche et la structure sandwich 4 est trempée dans la résine diluée. Après fermeture du récipient, celui-ci est mis sous un vide de quelques centaines de millibars absolus (300 mb par exemple), pendant une durée d'environ 1 heure, afin d'obtenir une imprégnation satisfaisante desdits fibres et fils par la résine diluée.

Au cours de cette opération d'imprégnation, l'âme 1 n'est pas imprégnée puisqu'imperméable à la résine. La résine imprégnée est ensuite durcie, par exemple par élévation de température, par exemple à 120°C pendant 4 heures, avec éventuelle mise sous pression (quelques bars). Les armatures souples 2 et 3 deviennent ainsi des peaux rigides 14 et 15, respectivement, et les tronçons de fil traversants 8 et 9 deviennent des entretoises rigides filiformes 16 (voir la figure 1D). Ces entretoises 16 sont fortement ancrées à leurs extrémités dans les peaux rigides 14 et 15, grâce aux ancrages rigides 17 et 18, formés par les ponts 10 et 11 durcis. A la fin du durcissement de la résine d'imprégnation, la structure sandwich souple 4 est donc devenue une structure sandwich rigide 19, dans laquelle les entretoises rigides filiformes 16 sont orthogonales auxdites peaux rigides 14 et 15. Ces entretoises 16 présentent alors un taux de fibre compris entre 30% et 90% et, de préférence, entre 30% et 50%.

Pour former la matrice carbone de la structure sandwich rigide 19, on soumet cette dernière à une pyrolyse à température élevée, par exemple 900°C, ce qui stabilise la géométrie de cette structure sandwich et élimine l'âme 1. Eventuellement, cette structure 19 peut être densifiée et traitée de manière connue pour que sa matrice devienne du type céramique. On obtient alors la pièce monolithique composite 20 de la figure 1E comportant deux peaux 21 et 22 de matériau composite (issues des peaux 14 et 15) espacées l'une de l'autre et reliées l'une à l'autre par une pluralité d'entretoises filiformes 23 de matériau composite (issues des entretoises 16), orthogonales auxdites peaux 21 et 22.

Même après densification par les techniques connues des peaux 14 et 15, les peaux 21 et 22 gardent une certaine porosité, qui peut être gênante pour certaines applications de la pièce 20. Il est alors possible de recouvrir la face externe d'au moins l'une des peaux 21 ou 22 d'un revêtement 24, par exemple en un produit d'étanchéité du type "gel coat" (voir figure 3).

Dans la variante de mise en oeuvre du procédé conforme à la présente invention, représentée sur les figures 4A, 4B et 4C, la structure sandwich souple 4 est disposée sur un support de mousse 25 et assemblée, par piquage sans nouage, au moyen d'un seul fil d'aiguille 26, semblable au fil 5, sans l'aide d'un fil de navette. Le fil d'aiguille 26, qui forme les tronçons traversants 8 et 9 et les ponts 10 comme précédemment, est amené à faire des boucles 27 dans le support 25 (figure 4A) à la place des ponts 11.

Après élimination du support 25 (figure 4B), les boucles 27 sont rabattues et pressées contre la structure sandwich souple 4 en formant des amas 28. Après imprégnation et durcissement de la résine (figure 4C), ces amas 28 deviennent des têtes rigides 29, aptes à remplacer les ancrages rigides 18 de la figure 1D.

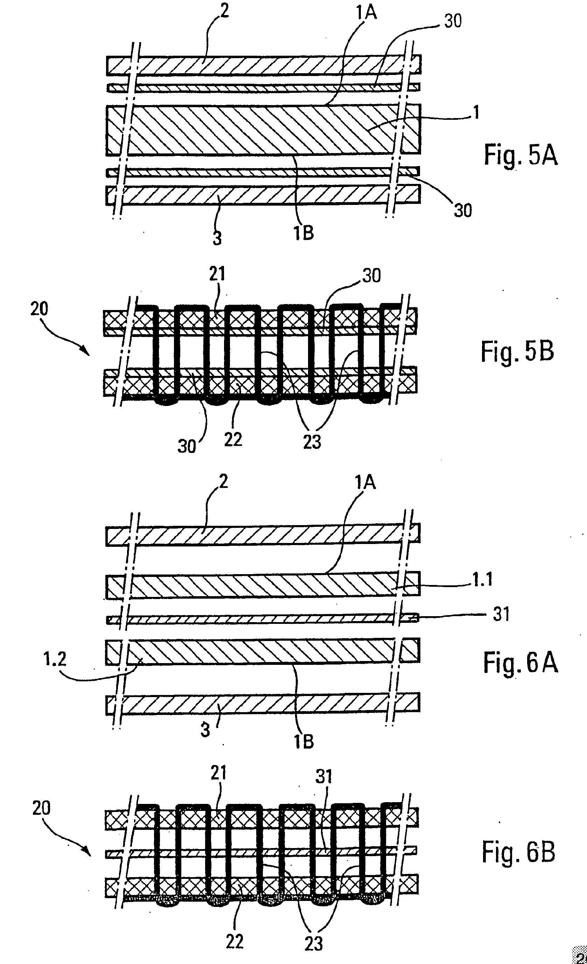

Dans la variante de réalisation des figures 5A et 5B, des plaques 30, choisies pour leurs propriétés physiques et/ou mécaniques (étanchéité, réflectivité de la chaleur, etc ...), sont intercalées au cours de la formation de la structure sandwich 4, entre l'âme 1 et lesdites armatures fibreuses 2, 3 respectivement. Ensuite, les plaques 30 sont solidarisées de la structure sandwich 4, lors de l'assemblage par piquage des éléments 1, 2 et 3 (figure 5A). Après imprégnation, durcissement, pyrolyse et densification, on obtient la pièce composite 20 de la figure 5B dans laquelle les plaques minces 30 sont appliquées intérieurement contre lesdites peaux 21 et 22 et traversées par lesdites entretoises 23.

La variante de réalisation 20 montrée par les figures 6A et 6B comporte une plaque mince 31, également choisie pour ses propriétés physiques et/ou mécaniques, disposée entre les peaux 21 et 22 et traversée et maintenue par les entretoises 23. Pour obtenir une telle structure (voir la figure 6A), on forme l'âme 1 par deux couches 1.1 et 1.2 superposées et on intercale ladite plaque mince 31 entre ces dernières. Ensuite, ladite plaque mince 31 est solidarisée de l'ensemble lors de l'assemblage par piquage de la structure sandwich 1.1, 1.2, 2 et 3 puis, comme précédemment, on procède à l'imprégnation, au durcissement, à la pyrolyse et à la densification de cette structure sandwich.

Bien que sur les figures 1C à 1E, 3, 5B et 6B, on ait représenté des points de piquage 7 avec nouage particulièrement simples, il va de soi que de tels points peuvent être plus complexes, comme par exemple le point de chaînette.

## Revendications

1. Procédé pour la réalisation d'une pièce monolithique composite fibres/matrice thermostructurale (20) comportant deux peaux de matériau composite (21, 22) espacées l'une de l'autre et reliées l'une à l'autre par une pluralité d'entretoises filiformes de matériau composite (23), procédé selon lequel :
a) on forme une structure sandwich souple (4) comportant une âme souple intermédiaire (1), réalisée en un matériau apte à être pénétré par une aiguille et imperméable à la résine devant engendrer ladite matrice, et deux armatures fibreuses souples externes (2, 3), respectivement disposées sur des faces externes opposées (1A, 1B) de ladite âme souple (1) ;
b) on assemble par piquage lesdites armatures fibreuses (2, 3) et ladite âme (1) de cette structure sandwich (4), au moyen d'un fil (5, 26) formant des points de piqûre qui comportent des tronçons de fil (8, 9) traversant lesdites armatures fibreuses (2, 3)et ladite âme (1) ;
c) on imprègne ladite structure sandwich (4) par ladite résine, à l'état visqueux ;
d) on procède au durcissement de ladite résine imprégnant ladite structure sandwich (4) ; et
e) on élimine ladite âme (1),
**caractérisé :**
- **en ce que** ledit fil de piquage (5, 26) est constitué par une mèche comportant une pluralité de filaments (12) non liés entre eux ;
- **en ce que**, après l'opération de piquage spécifiée sous b), lesdits tronçons de fil (8, 9) traversant lesdites armatures fibreuses (2, 3) et ladite âme (1) présentent, dans cette dernière, des canaux longitudinaux (13) ménagés entre lesdits filaments (12) et s'étendant de l'une desdites armatures fibreuses à l'autre ; et
- **en ce que** l'opération d'imprégnation spécifiée sous c) est réalisée de façon que ladite résine durcissable soit amenée à pénétrer dans lesdits canaux longitudinaux (13) desdits tronçons de fil traversants (8, 9) pour former, à l'emplacement de chacun de ceux-ci, un pont de résine en contact par ses extrémités opposées avec la résine imprégnant lesdites armatures fibreuses souples (2, 3).

2. Procédé selon la revendication 1,
**caractérisé en ce que** ladite âme (1) est réalisée en une mousse d'une matière synthétique présentant une densité comprise entre 0,04 et 0,1.

3. Procédé selon la revendication 2,
**caractérisé en ce que** ladite densité est comprise entre 0,05 et 0,07.

4. Procédé selon l'une des revendications 2 ou 3,
**caractérisé en ce que** ladite matière synthétique est un polystyrène.

5. Procédé selon l'une des revendications 1 à 4,
**caractérisé en ce que**, après imprégnation et durcissement de ladite structure sandwich (4), chacune des entretoises filiformes (16) résultant de l'imprégnation et du durcissement d'un desdits tronçons de fil traversants (8, 9) présente un taux de fibre compris entre 30% et 90%.

6. Procédé selon la revendication 5,
**caractérisé en ce que** ledit taux de fibre est compris entre 30% et 50%.

7. Procédé selon l'une des revendications 1 à 6,
**caractérisé en ce que** ledit assemblage est obtenu par piquage avec nouage, de sorte que les extrémités desdits tronçons de fil traversants (8, 9) sont ancrées auxdites armatures fibreuses (2, 3) par des ponts (10, 11) reliant deux tels tronçons consécutifs.

8. Procédé selon l'une des revendications 1 à 6,
**caractérisé en ce que** ledit assemblage est obtenu par piquage sans nouage avec formation, d'un côté de ladite structure sandwich, de boucles saillantes, de sorte que de ce côté l'ancrage des extrémités des tronçons de fil traversants (8, 9) à l'armature correspondante (3) résulte de l'aplatissement (28) desdites boucles, alors que de l'autre côté de ladite structure sandwich, les extrémités des tronçons de fil traversants (8, 9) sont ancrées à l'armature fibreuse correspondante (2) par des ponts (10) reliant deux tronçons consécutifs.

9. Procédé selon l'une des revendications 1 à 8,
**caractérisé en ce que**, après ladite opération de durcissement de la résine, on procède à une élévation de température de ladite structure sandwich (4) afin d'obtenir la pyrolyse de ladite résine et l'élimination de ladite âme (1).

10. Procédé selon l'une des revendications 1 à 9,
**caractérisé en ce que**, au cours de la formation de la structure sandwich souple (4), on intercale au moins une plaque mince (30) entre ladite âme souple intermédiaire (1) et au moins l'une desdites armatures fibreuses (2, 3) et **en ce que** ladite plaque mince (30) est solidarisée desdites armatures fibreuses (2, 3) et de ladite âme (1) lors de l'assemblage par piquage de ces derniers éléments.

11. Procédé selon l'une des revendications 1 à 10,
**caractérisé en ce que** ladite âme souple intermédiaire (1) est constituée par au moins deux couches (1.1 et 1.2) superposées, **en ce qu'**au moins une plaque mince (31) est interposée entre lesdites couches (1.1 et 1.2) superposées et **en ce que** ladite plaque mince (31) est solidarisée desdites armatures fibreuses (2, 3) et desdites couches superposées de ladite âme (1) lors de l'assemblage par piquage de ces derniers éléments.

12. Pièce monolithique composite fibres/matrice thermostructurale (20) comportant deux peaux de matériau composite au moins sensiblement parallèles, (21, 22) espacées l'une de l'autre, et reliées entre elles par des moyens de liaison, obtenue par la mise en oeuvre du procédé selon l'une des revendications 1 à 11,
**caractérisée en ce que** lesdites peaux (21, 22) sont reliées l'une à l'autre par une pluralité d'entretoises filiformes de matériau composite (23), lesdites entretoises (23) étant au moins sensiblement orthogonales auxdites peaux (21,22).

13. Pièce monolithique composite fibres/matrices (20) selon la revendication 12,
**caractérisée en ce qu'**un revêtement (24) est appliqué extérieurement sur au moins l'une desdites peaux.

## Claims

1. Process for producing a thermostructural fibre/matrix composite monolith (20) comprising two skins (21, 22) of composite material that are spaced apart and connected to each other by a plurality of filiform spacers (23) of composite material, according to which process:
a) a flexible sandwich structure (4), comprising an intermediate flexible core (1), made of a material capable of being penetrated by a needle and impermeable to the resin that has to generate said matrix, and two external flexible fibrous reinforcements (2, 3), placed on opposed external faces (1A, 1B) of said flexible core (1) respectively, is formed;
b) said fibrous reinforcements (2, 3) and said core (1) of this sandwich structure (4) are assembled by stitching by means of a thread (5, 26) forming stitches that include thread portions (8, 9) passing transversely through said fibrous reinforcements (2, 3) and said core (1);
c) said sandwich structure (4) is impregnated with said resin in the viscous state;
d) the curing of said resin impregnating said sandwich structure (4) is carried out; and
e) said core (1) is removed,
**characterized:**
- **in that** said stitching thread (5, 26) is formed by a roving comprising a plurality of filaments (12) that are not linked together;
- **in that**, after the stitching operation specified at b), said thread portions (8, 9) passing transversely through said fibrous reinforcements (2, 3) and said core (1) have, in the latter, longitudinal channels (13) that are provided between said filaments (12) and extend from one of said fibrous reinforcements to the other; and
- **in that** the impregnation operation specified at c) is carried out so that said curable resin is made to penetrate said longitudinal channels (13) of said transverse thread portions (8, 9) in order to form, at the position of each of them, a resin bridge in contact via its opposed ends with the resin that impregnates said flexible fibrous reinforcements (2, 3).

2. Process according to Claim 1,
**characterized in that** said core (1) is made from a foam of a synthetic material having a density of between 0.04 and 0.1.

3. Process according to Claim 2,
**characterized in that** said density is between 0.05 and 0.07.

4. Process according to either of Claims 2 and 3,
**characterized in that** said synthetic material is a polystyrene.

5. Process according to one of Claims 1 to 4,
**characterized in that**, after impregnation and curing of said sandwich structure (4), each of the filiform spacers (16) resulting from the impregnation and from the curing of one of said transverse thread portions (8, 9) has a fibre content of between 30% and 90%.

6. Process according to Claim 5,
**characterized in that** said fibre content is between 30% and 50%.

7. Process according to one of Claims 1 to 6,
**characterized in that** said assembly is obtained by stitching with knotting in such a way that the ends of said transverse thread portions (8, 9) are anchored into said fibrous reinforcements (2, 3) by bridges (10, 11) that connect two such consecutive portions.

8. Process according to one of Claims 1 to 6,
**characterized in that** said assembly is obtained by stitching without knotting, with formation, on one side of said sandwich structure, of projecting loops in such a way that, on this side, the anchoring of the ends of the transverse thread portions (8, 9) into the corresponding reinforcement (3) results from the flattening (28) of said loops whereas, on the other side of said sandwich structure, the ends of the transverse thread portions (8, 9) are anchored into the corresponding fibrous reinforcement (2) by bridges (10) that connect two consecutive portions.

9. Process according to one of Claims 1 to 8,
**characterized in that**, after said resin curing operation, the temperature of said sandwich structure (4) is raised so as to pyrolyse said resin and to remove said core (1).

10. Process according to one of Claims 1 to 9,
**characterized in that**, during formation of the flexible sandwich structure (4), at least one thin sheet (30) is inserted between said intermediate flexible core (1) and at least one of said fibrous reinforcements (2, 3) and **in that** said thin sheet (30) is fastened to said fibrous reinforcements (2, 3) and to said core (1) while the latter elements are being assembled by stitching.

11. Process according to one of Claims 1 to 10,
**characterized in that** said intermediate flexible core (1) is formed by at least two superposed plies (1.1 and 1.2), **in that** at least one thin sheet (31) is interposed between said superposed plies (1.1 and 1.2) and **in that** said thin sheet (31) is fastened to said fibrous reinforcements (2, 3) and to said superposed plies of said core (1) while the latter elements are being assembled by stitching.

12. Thermostructural fibre/matrix composite monolith (20) comprising two skins (21, 22) of composite material at least substantially parallel that are spaced apart and connected to each other by linking means, said monolith being obtained by implementing the process according to one of Claims 1 to 11 **characterized in that** said skins (21, 22) are connected to each other by a plurality of filiform spacers (23) of composite material, said spacers (23) being at least substantially orthogonal to said skins (21, 22).

13. Fibre/matrix composite monolith (20) according to Claim 12, **characterized in that** a coating (24) is applied externally to at least one of said skins.

## Patentansprüche

1. Verfahren zur Herstellung eines aus einem aus Faser und Matrix bestehenden Verbundwerkstoff hergestellten, hitzebeständigen monolithischen Teils (20), umfassend zwei voneinander beabstandete Verbundwerkstofflagen (21, 22), die durch mehrere fadenförmige Verbundwerkstoffstege (23) miteinander verbunden sind, nach welchem:
a) eine biegsame Sandwichstruktur (4) gebildet wird, welche eine zwischenliegende biegsame Kernschicht (1), die aus einem von einer Nadel durchdringbaren, für das Harz, das die Matrix erzeugen soll, undurchlässigen Material hergestellt ist, und zwei äußere biegsame Faserbewehrungen (2, 3), die jeweils auf einander gegenüberliegenden Außenseiten (1A, 1B) der biegsamen Kernschicht (1) angeordnet sind, aufweist;
b) die Faserbewehrungen (2, 3) und die Kernschicht (1) dieser Sandwichstruktur (4) mit einem Faden (5, 26) verbunden werden, der Nähstiche bildet, welche Garnabschnitte (8, 9) aufweisen, die durch diese Faserbewehrungen (2, 3) und die Kernschicht (1) hindurchführen;
c) die Sandwichstruktur (4) mit dem in einem viskosen Zustand befindlichen Harz getränkt wird;
d) das Harz, mit dem die Sandwichstruktur (4) getränkt wurde, gehärtet wird; und
e) die Kernschicht (1) entfernt wird,
**dadurch gekennzeichnet, dass**
- das Nähgarn (5, 26) aus einem Strang besteht, der mehrere untereinander nicht verbundene Einzelfäden (12) aufweist;
- nach dem unter b) näher dargestellten Vorgang die durch die Faserbewehrungen (2, 3) und die Kernschicht (1) hindurch geführten Garnabschnitte (8, 9) in der letzteren längsverlaufende Kanäle (13) aufweisen, die zwischen den Einzelfäden (12) eingebracht sind und sich von einer der Faserbewehrungen zur anderen erstrecken; und
- der unter c) näher dargestellte Imprägniervorgang derart durchgeführt wird, dass das härtbare Harz in diese längsverlaufende Kanäle (13) der durchgehenden Garnabschnitte (8, 9) eindringen kann und somit an der Stelle eines jeden dieser Kanäle eine Harzbrücke bildet, die an ihren gegenüberliegenden Enden mit dem Harz in Kontakt steht, mit dem die biegsamen Faserbewehrungen (2, 3) getränkt sind.

2. Verfahren nach Anspruch 1,
**dadurch gekennzeichnet, dass** die Kernschicht (1) aus einem Kunststoffschaum mit einer Dichte von zwischen 0,04 und 0,1 hergestellt ist.

3. Verfahren nach Anspruch 2,
**dadurch gekennzeichnet, dass** die Dichte zwischen 0,05 und 0,07 ist.

4. Verfahren nach einem der Ansprüche 2 oder 3,
**dadurch gekennzeichnet, dass** der Kunststoff Polystyrol ist.

5. Verfahren nach einem der Ansprüche 1 bis 4,
**dadurch gekennzeichnet, dass** nach der Imprägnierung und der Aushärtung der Sandwichstruktur (4) jeder der nach der Imprägnierung und Aushärtung eines der durchgehenden Garnabschnitte (8, 9) entstehenden fadenförmigen Stege (16) einen Fasergehalt von zwischen 30 % und 90 % aufweist.

6. Verfahren nach Anspruch 5,
**dadurch gekennzeichnet, dass** der Fasergehalt zwischen 30 % und 50 % liegt.

7. Verfahren nach einem der Ansprüche 1 bis 6,
**dadurch gekennzeichnet, dass** das Zusammenfügen durch Maschinennähen mit Verknüpfung erzielt wird, so dass die Enden der durchgehenden Garnabschnitte (8, 9) durch Brücken (10, 11), die zwei derartige aufeinander folgende Abschnitte miteinander verbinden, mit den Faserbewehrungen (2, 3) verankert sind.

8. Verfahren nach einem der Ansprüche 1 bis 6,
**dadurch gekennzeichnet, dass** das Zusammenfügen durch Maschinennähen ohne Verknüpfung erfolgt, wobei auf der einen Seite der Sandwichstruktur vorstehende Schlingen gebildet werden, so dass auf dieser Seite die Verankerung der Enden der durchgehenden Garnabschnitte (8, 9) mit der entsprechenden Bewehrung (3) durch das Flachdrücken (28) der Schlingen erfolgt, während auf der anderen Seite der Sandwichstruktur die Enden der durchgehenden Fadenabschnitte (8, 9) über Brücken (10), die zwei aufeinander folgende Abschnitte miteinander verbinden, mit der entsprechenden Faserbewehrung (2) verankert sind.

9. Verfahren nach einem der Ansprüche 1 bis 8,
**dadurch gekennzeichnet, dass** nach dem Aushärten des Harzes die Temperatur der Sandwichstruktur (4) erhöht wird, um so die Pyrolyse des Harzes zu erreichen und die Kernschicht (1) zu vernichten.

10. Verfahren nach einem der Ansprüche 1 bis 9,
**dadurch gekennzeichnet, dass** während der Ausbildung der biegsamen Sandwichstruktur (4) mindestens eine dünne Platte (30) zwischen die zwischenliegende Kernschicht (1) und mindestens eine der Faserbewehrungen (2, 3) eingesetzt wird, und dass beim Zusammennähen der Faserbewehrungen (2, 3) und der Kernschicht (1) die dünne Platte (30) mit diesen Elementen fest verbunden wird.

11. Verfahren nach einem der Ansprüche 1 bis 10,
**dadurch gekennzeichnet, dass** die zwischenliegende biegsame Kernschicht (1) aus mindestens zwei übereinander liegenden Schichten (1.1 und 1.2) besteht, dass mindestens eine dünne Platte (31) zwischen diesen übereinander liegenden Schichten (1.1 und 1.2) eingesetzt ist, und dass beim Zusammennähen der Faserbewehrungen (2, 3) und der übereinander liegenden Schichten der Kernschicht (1) die dünne Platte (31) mit diesen Elementen fest verbunden wird.

12. Teil, welches aus einem aus Faser und Matrix bestehenden Verbundwerkstoff hergestellt, hitzebeständig und monolithisch ist sowie zwei mindestens im Wesentlichen parallel zueinander verlaufende, voneinander beabstandete Verbundwerkstofflagen (21, 22), die durch Verbindungsmittel miteinander verbunden sind, umfasst und nach dem Verfahren nach einem der Ansprüche 1 bis 11 hergestellt wurde,
**dadurch gekennzeichnet, dass** die Lagen (21, 22) durch mehrere fadenförmige Verbundwerkstoffstege (23) miteinander verbunden sind, wobei die Stege (23) mindestens im Wesentlichen im rechten Winkel zu den Lagen (21, 22) stehen.

13. Teil (20) nach Anspruch 12,
**dadurch gekennzeichnet, dass** ein Überzug (24) von außen auf mindestens eine der Lagen aufgebracht wird.
